# EUROPÄISCHE PATENTSCHRIFT

(11) **EP 1 320 271 B1**
(45) Veröffentlichungstag und Bekanntmachung des Hinweises auf die Patenterteilung: **25.02.2004**
(21) Anmeldenummer: 01440410.7
(22) Anmeldetag: 04.12.2001
(51) Int. Cl.: H04Q 7/30, H04B 7/005, H04Q 7/38

(54) **Basisstation für UMTS zur Übertragung von Zeitschlitztypen**
Basestation for UMTS for transmission of time slot types
Station de base pour UMTS pour la transmission d'intervalles de temps

(43) Veröffentlichungstag der Anmeldung: 18.06.2003
(73) Patentinhaber: ALCATEL, 75008 Paris (FR)
(72) Erfinder: Warich, Anja, 70499 Stuttgart (DE); Jeschke, Michael, 70197 Stuttgart (DE)
(74) Vertreter: Menzietti, Domenico, Dipl.-Ing

(56) Entgegenhaltungen:
- EP-A- 0 949 830
- EP-A- 1 133 079
- "3RD GENERATION PARTNERSHIP PROJECT (3GPP);TECHNICAL SPECIFICATION GROUP RADIO ACCESS NETWORK MULTIPLEXING AND CHANNEL CODING (FDD) (3G TS 25.212 VERSION 3.0.0)" , 3G TS 25 212 V3.0.0, XX, XX, PAGE(S) COMPLETE54 XP002149187 * Seite 44, Absatz 4.4 - Seite 50, Absatz 4.4.4.3 *

## Beschreibung

Die Erfindung betrifft eine Basisstation für ein UMTS-Mobilfunksystem, UMTS= Universal Mobile Telecommunication Standard.

Beim UMTS sind verschiedene Übertragungsverfahren zu realisieren, so z.B. compressed mode, bei dem in Übertragungslücken vorgegebene Zeitschlitztypen übermittelt werden müssen.

Die Information über das Auftreten von compressed mode kann z.B. in der chip Verarbeitungseinheit innerhalb einer Basisstation abgespeichert werden. Dies hat den Nachteil, dass auf Grund der Ausführung der chip Verarbeitungseinheit als z.B. ASIC eine Hardware-Lösung erforderlich ist, die zum einen teuer und zum anderen unflexibel, d.h. nachträglich nicht veränderbar ist.

In EP 0 949 830 A2 ist eine Basisstation für ein Mobilfunksystem offenbart. Die Basisstation beinhaltet eine segmenting portion, die aus von einer error correction coding portion empfangenen Daten und von einer control signal inserting portion empfangenen TPC, PL, RI Rahmen zur Übertragung der Daten bildet; RI = transmission rate information. Jeder Rahmen beinhaltet PL, TPC, RI, Daten. In einer ersten Ausgestaltung eines Rahmens ist die Reihenfolge PL, TPC, RI, Daten, in einer zweiten Ausgestaltung PL, RI, Daten 1, TPC, Daten2, in einer dritten RI, Daten 1, TPC, Daten2, PL. TPC für uplink wird gewonnen mittels uplink pilot signal extraction portion + SIR (signal power to interference power ratio) measuring portion + TPC generating portion. TPC für downlink, d.h. zu gain control des auszusendenden downlink Signals, wird gewonnen mittels uplink TPC signal extraction portion.

In XP-002149187, 3^{rd} Generation Partnership Project (3GPP), Technical Specification Group Radio Access Netwrok, Multiplexing and channel coding (FDD), 3G TS 25.212 version 3.0.0, 1999 sind für den sogenannten compressed mode mehrere Rahmenstrukturen offenbart. Die Rahmenstruktur für den uplink beinhaltet Slots mit Data oder Pilot, TFCI, FBI, TPC, die von einer transmission gap unterbrochen sind. Für den downlink gibt es zwei Rahmenstrukturen. Rahmenstruktur Type A beinhaltet Slots mit TFCI, Data 1, TPC, Data2, PL, die von einer transmission gap unterbrochen sind, wobei am Ende der transmission gap ein Pilot gesendet wird. Rahmenstruktur Type B beinhaltet Slots mit TFCI, Data 1, TPC, Data2, PL, die von einer transmission gap unterbrochen sind, wobei am Anfang der transmission gap TFCI, Data 1, TPC und am Ende der transmission gap ein Pilot gesendet wird.

Aufgabe der Erfindung ist es, eine Basisstation für UMTS zu schaffen, die möglichst einfach eine Realisierung der Übertragung verschiedener Übertragungsverfahren und verschiedener Zeitschlitztypen ermöglicht.

Gelöst wird diese Aufgabe erfindungsgemäß durch eine Basisstation gemäß Patentanspruch 1.

Die erfindungsgemäße Basisstation ist ein sogenannter Node B eines UMTS-Mobilfunksystem. Beim UMTS werden zu übertragende Signale in Zeitschlitzen formatiert und anschließend mittels CDMA kodiert. Nach einer anschließenden Umsetzung in Funksignalen werden diese zu den Mobilfunkstationen ausgesandt. Die Basisstation beinhaltet eine Einheit zur Steuerung der Übertragungsleistung, die als downlink power control bezeichnet wird. Sie ist derart ausgestaltet, dass sie einer Verarbeitungseinheit zur Durchführung der CDMA-Kodierung mindestens eine Information über mindestens einen zu übertragenden Zeitschlitztyp übermittelt. Die Einheit ist beispielsweise ein Prozessor. Die Ausgestaltung erfolgt durch entsprechende Software Programmierung des Prozessors, beispielsweise mittels eines Computerprogramms in der Programmiersprache C++. Die Verarbeitungseinheit wird als chip processing unit bezeichnet. Für einen aktuellen Zeitschlitz generiert sie unter Ausnutzung der empfangenen Information einen geeigneten Zeitschlitztyp, der anschließend CDMA kodiert wird.

In einer bevorzugten Ausgestaltung der Erfindung ist die Basisstation dadurch gekennzeichnet, dass eine Information in Form mindestens einer vier Bit-Kombination übertragen wird, wobei jedes Bit einen Parameter eines Zeitschlitztyps repräsentiert. Ein Zeitschlitz hat z.B. die Parameter DATA1+2, TPC, TFCI, PL. Durch Setzen bzw. Nicht-Setzen eines Parameters können unterschiedliche Zeitschlitztypen generiert werden. Diese werden z.B. dazu genutzt, die verschiedenen Zeitschlitztypen von compressed mode und/oder SSDT zu realisieren. Mittels vier Bit können grundsätzlich 16 verschiedene Zeitschlitztypen realisiert werden. Anstelle der Verwendung von einem Bit für DATA1+2 +2 können auch zwei Bit verwendet werden, eins für DATA1 und ein weiteres für DATA2. So können wahlweise DATA1 oder DATA2 oder DATA1+2 +2 oder keine Daten übertragen werden. Mittels dann fünf Bit können grundsätzlich 32 verschiedene Zeitschlitztypen realisiert werden.

In einer weiteren bevorzugten Ausgestaltung der Erfindung ist die Basisstation dadurch gekennzeichnet, dass eine Information in Form mindestens einer zwei Bit-Kombination übertragen wird, wobei jede Bit-Kombination einen anderen Zeitschlitztyp repräsentiert. Die Information wird kodiert übertragen. Eine zwei Bit-Kombination entspricht einem bestimmten Zeitschlitztyp, z.B. beinhaltend TPC oder PL.

Vorteilhafterweise sind mindestens fünf verschiedene Zeitschlitztypen vorgesehen. Damit ist mittels einer einzigen Programmierung sowohl compressed mode und SSDT als auch downlink Steuerung realisierbar. Die Einheit zur Steuerung der Übertragungsleistung übernimmt damit die zentrale Aufgabe der Steuerung bzw. Signalisierung von drei verschiedenen Übertragungsverfahren. Die Einheit hat eine Schnittstelle zur uplink Steuerung und erhält über diese Schnittstelle die Informationen für die SSDT und die downlink Steuerung.

Vorteilhafterweise wird jede Information in Form mindestens einer zwei Bit-Kombination und zusammen mit power control Bits übertragen wird. Durch das Anfügen der Bit-Kombination an die bereits vorhandenen power control Bits werden vorhandene Strukturen mit ausgenutzt, was zu einer einfachen Realisierung führt.

Die Übermittlung einer Information kann für jeden zu übertragenden Zeitschlitz erfolgen. Die Übermittlung kann synchron oder asynchron zu den Zeitschlitzen erfolgen, die in Rahmen übertragen werden. In vorteilhafterweise kann die Übermittlung auch nur dann erfolgen, wenn Änderungen auftreten, z.B. während einer Übertragungslücke im compressed mode oder bei einer Umschaltung im SSDT. Im Normalbetrieb wird z.B. nicht stets die selbe Information wiederholt.

Vorteilhafte Ausgestaltungen der Erfindung sind den abhängigen Ansprüchen und der nachfolgenden Beschreibung zu entnehmen.

Im folgenden werden drei Ausführungsbeispiele der Erfindung anhand von sechs Figuren erläutert. Es zeigen:
- Fig. 1: eine schematische Darstellung eines Ausschnitts aus einem Mobilfunksystem,
- Fig. 2: fünf beispielhafte Zeitschlitztypen,
- Fig. 3: eine schematische Darstellung eines Ausschnitts aus einer Basisstation,
- Fig. 4: eine detaillierte Darstellung des Ausschnitts der Basisstation aus Fig. 3,
- Fig. 5: eine alternative detaillierte Darstellung des Ausschnitts der Basisstation aus Fig. 3,
- Fig. 6: eine alternative schematische Darstellung des Ausschnitts der Basisstation aus Fig. 3.

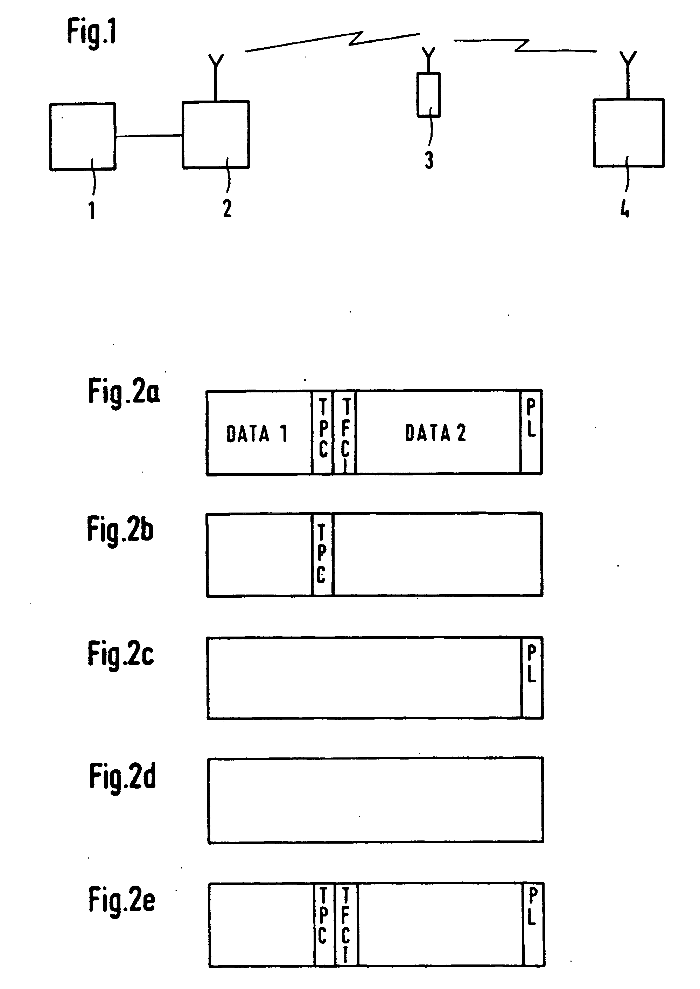

Das erste Ausführungsbeispiel wird nun anhand der Figuren 1 bis 4 erläutert. Fig. 1 zeigt einen Ausschnitt aus einem UMTS-Mobilfunksystem. Das UMTS-Mobilfunksystem beinhaltet eine Steuerung 1, eine erste Basisstation 2, eine Mobilfunkstation 3 und eine zweite Basisstation 4.

Die Steuerung 1 wird im UMTS als RNC bezeichnet, RNC= Radio Network Controller. Die Steuerung 1 überträgt zur Basisstation 2 Teilnehmerdaten, die in der Basisstation 2 CDMA kodiert werden und anschließend über Funk zur Mobilfunkstation 3 gesendet werden, CDMA= Code Division Multiple Access. Die Richtung von der Basisstation 2 zur Mobilfunkstation 3 wird als downlink bezeichnet. Zusätzlich zu den Daten werden Steuerinformationen zur Basisstation 2 übertragen. Diese enthalten z.B. NBAP= Node B Application Part, Kontrollparameter, Informationen über ein Übertragungsverfahren, z.B. den sogenannten compressed mode. Die Übertragung von Daten erfolgt uni- oder bidirektional; die Richtung von der Mobilfunkstation 3 zur Basisstation 2 wird als uplink bezeichnet.

Die Basisstation 2 wird im UMTS als Node B bezeichnet. In der Basisstation 2 werden die von der Steuerung 1 empfangenen Informationen, die als Symbole bezeichnet werden durch CDMA-Kodierung in sogenannte Chips umgewandelt und anschließend über Funk zur Mobilfunkstation 3 übertragen. Basisstation 2 bedient alle Mobilfunkstationen innerhalb einer Zelle. Basisstation 4 bedient alle Mobilfunkstationen innerhalb einer weiteren Zelle. Die Zellen der Basisstationen 2 und 4 überlappen, so dass sich Konflikte ergeben können für Mobilfunkstationen, die sich im überlappenden Bereich befinden. Durch das sogenannte SSDT wird die Datenkommunikation für die betreffende Mobilfunkstation nur zu einer Basisstation aufrechterhalten, während zur anderen eine Synchronisationsverbindung mit Sendeleistungskontrolle aufrechterhalten wird; SSDT= Site Selection Diversity TPC.

Bei vielen aktiven Mobilfunkstationen innerhalb einer Zelle kann es nötig sein, eine downlink Steuerung vorzusehen, um eine Optimierung hinsichtlich Durchsatz, Sendeleistung, etc. zu erzielen.

Ferner sind bei sogenannten Übertragungsverfahren compressed mode Übertragungslücken vorzusehen, in denen Messungen durchgeführt werden. Die Übertragungslücken werden im UMTS als transmission gaps bezeichnet. Es ist zu unterscheiden zwischen compressed mode Typ A und Typ B.

In der Basisstation 2 werden die in rahmenstrukturierten Zeitschlitzformatierten Symbole derart verarbeitet, dass sie die Kriterien für die aktuell zu verwendenden Zeitschlitztypen, z.B. SSDT, compressed mode entsprechen.

Die Mobilfunkstation 3 wird im UMTS als user equipment bezeichnet und kann auch als UMTS-Handy bezeichnet werden.

Fig. 2 zeigt fünf beispielhafte Zeitschlitztypen.

Symbole werden in Rahmen übertragen. Jede Rahmen beinhaltet mehrere Zeitschlitze. Jeder Zeitschlitz beinhaltet eine Auswahl aus Daten und Steuerinformationen. Zu den Steuerinformationen gehören: TPC, TFCI, PL.

TPC= Transmit Power Control liefert der Mobilfunkstation die von der Mobilfunkstation zu verwendende Sendeleistung für den uplink. Je besser der Empfang in der Basisstation, desto niedriger kann die Sendeleistung der Mobilfunkstation gewählt werden. TFCI= Transport Format Combination Indicator liefert der Mobilfunkstation Informationen über die Übertragungsart. PL= Pilot liefert der Mobilfunkstation ein Pilotsignal, das der Synchronisierung dient.

Fig. 2a zeigt einen ersten Zeitschlitztyp, der zur Übermittlung von Daten dient. Neben Daten DATA1 und DATA2 werden TPC, TFCI und PL übertragen.

Fig. 2b zeigt einen zweiten Zeitschlitztyp, der beim compressed mode Typ B als erster Zeitschlitz in der Übertragungslücke gesendet wird. Er beinhaltet nur TPC.

Fig. 2c zeigt einen dritten Zeitschlitztyp, der beim compressed mode Typ A und Typ B als letzter Zeitschlitz in der Übertragungslücke gesendet wird. Er beinhaltet nur PL.

Fig. 2d zeigt einen vierten Zeitschlitztyp, der beim compressed mode Typ A und Typ B in der Übertragungslücke gesendet wird. Er beinhaltet keine Daten und keine Steuerinformationen, ist somit leer.

Fig. 2e zeigt einen fünften Zeitschlitztyp, der beim SSDT zu der einen Basisstation gesendet wird. Er beinhaltet TPC, TFCI, PL. Zur anderen Basisstation wird ein Zeitschlitz gemäß Fig. 2a gesendet. Der fünfte Zeitschlitz kann auch für eine downlink Steuerung verwendet werden, z.B. zur Reduktion der Datenrate bei Überlast.

Die Aufzählung der Zeitschlitztypen ist beispielhaft und nicht abschließend. Es können auch bisher nicht definierte Zeitschlitztypen verwendet werden, z.B. ein Zeitschlitz in dem DATA1, TPC, TFCI, PL, aber nicht DATA2 verwendet wird oder ein Zeitschlitz in dem TPC und PL verwendet wird.

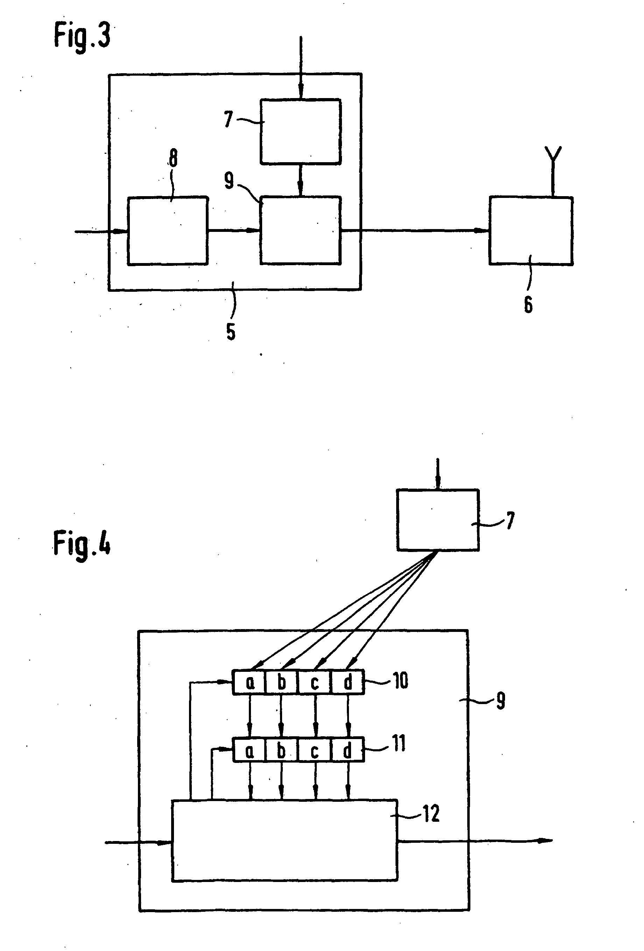

Fig. 3 zeigt einen Ausschnitts aus der Basisstation 2. Die Basisstation 2 beinhaltet eine downlink Steuereinheit 5, die auf einem Board angeordnet ist, und einen Konverter 6. Die downlink Steuereinheit 5 beinhaltet eine Einheit 7 zur Steuerung der Übertragungsleistung, eine Symbol-Verarbeitungseinheit 8 und eine Verarbeitungseinheit 9.

Einheit 7 wird als downlink power control bezeichnet und beinhaltet z.B. einen entsprechend programmierten DSP oder Mikroprozessor; DSP= Digital Signal Processor. Einheit 7 ist mit einer uplink Steuerung verbunden. Die uplink Steuerung empfängt von der Mobilfunkstation 3 u.a. Daten, TFCI, FBI, TPC. FBI und TPC werden zur Einheit 7 weitergeleitet; FBI= Feedback Indicator. Aus TPC werden die Sendeleistungen der zur Mobilfunkstation 3 auszusendenden Signale bestimmt. Dabei werden sogenannte power control bits generiert, die zur Verarbeitungseinheit 9 übertragen werden. Aus FBI werden Maßnahmen für die downlink Steuerung abgeleitet.

Symbol-Verarbeitungseinheit 8 wird als symbol processing unit bezeichnet und beinhaltet z.B. einen entsprechend programmierten DSP oder Mikroprozessor. Symbol-Verarbeitungseinheit 8 ist mit Steuerung 1 und Verarbeitungseinheit 9 verbunden.

Verarbeitungseinheit 9 wird als chip processing unit bezeichnet und beinhaltet z.B. ein entsprechend programmiertes FPGA oder ASIC; FPGA= Freely Programmable Gate Array, ASIC= Application Specific Integrated Circuit. In Verarbeitungseinheit 9 wird u.a. das sogenannte Spreizen der auszusendenden Signale durch CDMA-Kodierung durchgeführt.

Konverter 6 wird als RF converter bezeichnet, RF= Radio Frequency, und dient der Umsetzung der auszusendenden CDMA kodierten Signale in Funksignale.

Einheit 7 zur Steuerung der Übertragungsleistung ist derart ausgestaltet, dass sie der Verarbeitungseinheit 9 mindestens eine Information über mindestens einen zu übertragenden Zeitschlitztyp übermittelt. Verarbeitungseinheit 9 werden vier Bits abcd übermittelt, die auch flags bezeichnet werden können. Bit a kann Null oder Eins gesetzt werden und gibt an, ob im aktuellen Zeitschlitz TPC mitgesendet werden soll oder nicht. Bit b kann Null oder Eins gesetzt werden und gibt an, ob im aktuellen Zeitschlitz TFCI mitgesendet werden soll oder nicht. Bit c kann Null oder Eins gesetzt werden und gibt an, ob im aktuellen Zeitschlitz PL mitgesendet werden soll oder nicht. Bit d kann Null oder Eins gesetzt werden und gibt an, ob im aktuellen Zeitschlitz Daten mitgesendet werden sollen oder nicht. Wird beispielsweise die vier Bit-Kombination 0010 gesendet, so generiert die Verarbeitungseinheit 9 einen Zeitschlitz entsprechend Zeitschlitztyp aus Fig. 2c. Wird beispielsweise die vier Bit-Kombination 1110 gesendet, so generiert die Verarbeitungseinheit 9 einen Zeitschlitz entsprechend Zeitschlitztyp aus Fig. 2e.

### Für compressed mode gilt folgendes:

Die Information, wann eine Übertragungslücke auftreten soll und ihre zeitliche Länge sowie der Typ A oder B sind in Einheit 7 abgespeichert. Während der normalen Datenüberragung lautet die vier Bit-Kombination 1111 damit in der Verarbeitungseinheit 9 Zeitschlitze gemäß Zeitschlitztyp aus Fig. 2a generiert werden. Während der Übertragungslücke lautet die vier Bit-Kombination 0000 damit Messungen durchgeführt werden können, mit folgenden Ausnahmen: Bei compressed mode Typ A lautet die vier Bit-Kombination für den letzten Zeitschlitz der Übertragungslücke 0010 damit ein Zeitschlitz gemäß Zeitschlitztyp aus Fig. 2c übertragen wird. Bei compressed mode Typ B lautet die vier Bit-Kombination für den ersten Zeitschlitz der Übertragungslücke 1000 damit ein Zeitschlitz gemäß Zeitschlitztyp aus Fig. 2b übertragen wird und die vier Bit-Kombination für den letzten Zeitschlitz der Übertragungslücke 0010 damit ein Zeitschlitz gemäß Zeitschlitztyp aus Fig. 2c übertragen wird.

Zusätzlich kann die Information, wann eine Übertragungslücke auftreten soll und ihre zeitliche Länge sowie der Typ A oder B sind in Symbol-Verarbeitungseinheit 8 abgespeichert sein, um die Daten der Symbole während einer Übertragungslücke zu löschen. Erfolgt dies, so ist die vierte Bitstelle der vier Bit-Kombination redundant.

### Für SSDT gilt folgendes:

Aus FBI aus dem uplink bestimmt Einheit 7, ob der nächste Zeitschlitz ein Zeitschlitz vom Zeitschlitztyp aus Fig. 2a oder 2e sein soll. Für Zeitschlitz vom Zeitschlitztyp aus Fig. 2a wird die vier Bit-Kombination 1111 gewählt, für Zeitschlitz vom Zeitschlitztyp aus Fig. 2e wird die vier Bit-Kombination 1110 gewählt.

### Für downlink control gilt folgendes:

Aus FBI aus dem uplink bestimmt Einheit 7, ob eine Datenanpassung durchgeführt werden soll. Beispielsweise werden bei drohender Überlast einzelne Datenpakete nicht übertragen. Dazu sind dann Zeitschlitze vom Zeitschlitztyp aus Fig. 2e vorgesehen. Die Synchronisation und die Sendeleistungskontrolle wird weiterhin aufrechterhalten, doch wird das Datenaufkommen und somit die Netzbelastung kurzzeitig derart reduziert, dass eine ausgewogene, optimierte Zellenauslastung gegebenen ist. Es wird somit versucht, alle Verbindungen innerhalb der Zelle mit durchschnittlicher Qualität und durchschnittlichem Datendurchsatz aufrechtzuerhalten. Für einen Zeitschlitz vom Zeitschlitztyp aus Fig. 2e wird eine vier Bit-Kombination 1110 generiert und zur Verarbeitungseinheit 9 gesendet. Für Verbindungen, bei denen die Datenrate nicht reduziert werden soll wird weiterhin die vier Bit-Kombination 1111 verwendet.

Fig. 4 zeigt eine detaillierte Darstellung des Ausschnitts der Basisstation 2 aus Fig. 3. Der Ausschnitt zeigt die Einheit 7 und die Verarbeitungseinheit 9 aus Fig. 3. Die Verarbeitungseinheit 9 beinhaltet ein erstes Register 10 zum Speichern der vier Bit-Kombination abcd, ein zweites Register 11 zum Speichern der vier Bit-Kombination abcd und einen DSP 12 zur Verarbeitung der zu übertragenden Signale, z.B. Spreizen.

In Einheit 7 werden vier Bit-Kombinationen generiert und sequentiell zum Register 10 übertragen. Die Übertragung erfolgt z.B. über eine serielle oder eine parallele Schnittstelle oder einen Bus oder ein Bussystem. Für jeden Zeitschlitz wird beispielsweise eine vier Bit-Kombination generiert. An jeder Zeitschlitzgrenze wird der Inhalt des Registers 10 ins Register 11 kopiert. Der Inhalt vom Register 11 entscheidet über die Zusammensetzung des aktuellen Zeitschlitzes. Ist in Register 11 beispielsweise die vier Bit-Kombination 1000 gespeichert, so wird ein Zeitschlitz vom Zeitschlitztyp aus Fig 2b generiert, CDMA kodiert und zum Konverter 6 übertragen und anschließend per Funk ausgesendet.

Anstelle einer separaten Übertragung der vier Bit-Kombination abcd von Einheit 7 zur Verarbeitungseinheit 9 kann auch eine Übertragung zusammen mit den in der Einheit 7 generierten power control bits erfolgen. Anstelle von separaten Registern 10 und 11 können auch die für die power control bits vorgesehenen Register mitverwendet werden.

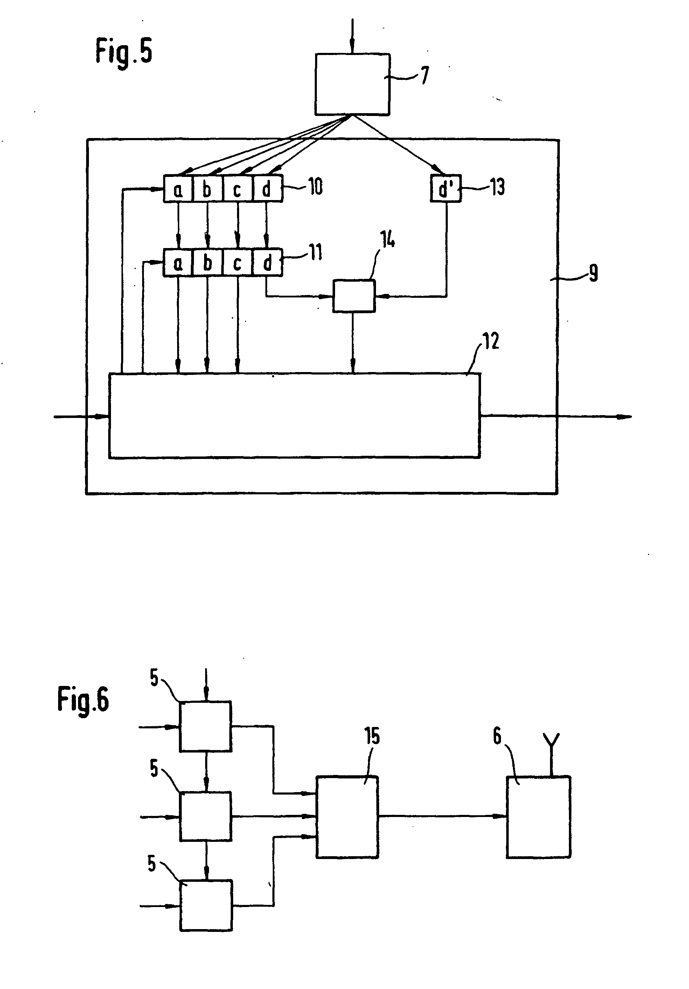

Das zweite Ausführungsbeispiel wird nun anhand der Figur 5 erläutert. Fig. 5 zeigt eine detaillierte Darstellung des Ausschnitts der Basisstation 2 aus Fig. 3. Der Ausschnitt zeigt die Einheit 7 und die Verarbeitungseinheit 9 aus Fig. 3. Die Verarbeitungseinheit 9 beinhaltet ein erstes Register 10 zum Speichern der vier Bit-Kombination abcd, ein zweites Register 11 zum Speichern der vier Bit-Kombination abcd und einen DSP 12 zur Verarbeitung der zu übertragenden Signale, z.B. Spreizen sowie ein drittes Register 13 und ein UND-Glied 14.

In Einheit 7 werden vier Bit-Kombinationen generiert und sequentiell zum Register 10 übertragen. Die Übertragung erfolgt z.B. über eine serielle oder eine parallele Schnittstelle oder einen Bus oder ein Bussystem. Für jeden Zeitschlitz wird beispielsweise eine vier Bit-Kombination generiert. An jeder Zeitschlitzgrenze wird der Inhalt des Registers 10 ins Register 11 kopiert.

Der Inhalt vom Register 11 entscheidet über die Zusammensetzung des aktuellen Zeitschlitzes. Ist in Register 11 beispielsweise die vier Bit-Kombination 1000 gespeichert, so wird ein Zeitschlitz vom zeitschlitztyp aus Fig 2b generiert, CDMA kodiert und zum Konverter 6 übertragen und anschließend per Funk ausgesendet.

Anstelle einer separaten Übertragung der vier Bit-Kombination abcd von Einheit 7 zur Verarbeitungseinheit 9 kann auch eine Übertragung zusammen mit den in der Einheit 7 generierten power control bits erfolgen. Anstelle von separaten Registern 10 und 11 können auch die für die power control bits vorgesehenen Register mitverwendet werden.

In Einheit 7 wird ferner ein Zusatzbit d' generiert. Dieses dient zur downlink control. Mittels der vier Bit-Kombination können Anweisungen für den nächsten Zeitschlitz übermittelt werden. Eine empfangene vier Bit-Kombination wird erst durch Übernahme ins Register 11 wirksam. Um ein beschleunigtes Zugreifen zu ermöglichen ist Register 13 eingefügt, das das Zusatzbit d' empfängt und dieses unverzögert bereitstellt. Durch das Zusatzbit d', welches Null oder Eins gesetzt werden kann, wird vergleichbar Bit d angegeben, ob im aktuellen Zeitschlitz Daten mitgesendet werden sollen oder nicht. Normalerweise ist Bit d gleich Eins, d.h. Daten werden gesendet, Bit d' ist dabei gleich Eins. Soll möglichst schnell die Datenaussendung unterbrochen werden, so wird Bit d' gleich Null gesetzt, woraufhin die Datenaussendung unverzögert direkt unterbunden wird, unabhängig vom Wert von Bit d.

Normalerweise ist Bit d' somit gleich Eins gesetzt. Sollen keine Daten gesendet werden, so können wahlweise Bit d gleich Null, Bit d' gleich Null oder beide gleich Null gesetzt werden.

Das dritte Ausführungsbeispiel wird nun anhand der Figur 6 erläutert. Fig. 6 zeigt eine alternative schematische Darstellung des Ausschnitts der Basisstation 2 aus Fig. 3. Die Basisstation aus Fig. 6 beinhaltet mehrere, funktionell vergleichbare downlink Steuereinheiten 5, wovon drei dargestellt sind. Anstelle von drei können auch zwei, vier, fünf, sechs, sieben, acht, neun, zehn, etc. downlink Steuereinheiten 5 verwendet werden. Die downlink Steuereinheiten 5 haben z.B. jeweils mindestens einen Ausgang, z.B. zwei, drei, vier, fünf, sechs, sieben, acht, neun, zehn, etc. Die downlink Steuereinheiten 5 sind beispielsweise auf verschiedenen Boards angeordnet und haben untereinander eine gleiche Anzahl von Ausgängen. Alternativ hat mindestens eine downlink Steuereinheit 5 eine andere Anzahl von Ausgängen. In mindestens einer downlink Steuereinheit 5 wird das Prinzip der Übermittlung der vier Bit-Kombinationen abcd oder das Prinzip der Übermittlung der vier Bit-Kombinationen abcd und des Zusatzbits d' angewandt.

Die Basisstation aus Fig. 6 beinhaltet ferner einen Summierer 15 und den Konverter 6. Im Summierer 15 werden die Ausgangssignale der downlink Steuereinheiten 5 summiert und anschließend dem Konverter 6 zugeführt, der die Umsetzung in Funksignale und deren Aussendung durchführt.

In den Ausführungsbeispielen werden die vier Bit-Kombinationen abcd und ggf. das Zusatzbit d' in der Einheit 7 generiert und der Verarbeitungseinheit 9 zugeführt. Anstelle oder zusätzlich zur Zuführung zur Verarbeitungseinheit 9 können die vier Bit-Kombinationen abcd und ggf. das Zusatzbit d' auch der Symbol-Verarbeitungseinheit 8 zugeführt werden. In der Symbol-Verarbeitungseinheit 8 findet dann zumindest teilweise die Generierung der Zeitschlitztypen statt.

In den Ausführungsbeispielen werden mittels vier Bit-Kombinationen abcd und ggf. das Zusatzbit d' vier Parameterwerte TPC, TFCI, PL, DATA1+2 übertragen. Die Erfindung ist nicht auf diese vier Parameter beschränkt. Z.B. können mehr oder weniger Parameterwerte übertragen werden, z.B. zwei, drei, fünf, sechs, sieben, acht. Auch ist die Erfindung nicht darauf beschränkt, für jeden Parameter ein separates Bit vorzusehen. Beispielsweise können Informationen über die vier Zeitschlitztypen durch eine Kodierung mit zwei Bit übertragen werden. So wird z.B. die Bit-Kombination 00 für Zeitschlitztyp aus Fig. 2a verwendet, Bit-Kombination 01 für Zeitschlitztyp aus Fig. 2b, Bit-Kombination 10 für Zeitschlitztyp aus Fig. 2c, Bit-Kombination 11 für Zeitschlitztyp aus Fig. 2d. Mittels zweier Bit sind somit die Zeitschlitztypen für compressed mode realisiert. Wenn die Löschung der Daten bei SSDT in der Symbol-Verarbeitungseinheit durchgeführt wird, so kann mittels der zwei Bit auch SSDT realisiert werden durch Bit-Kombination 00. Für die downlink Steuerung bei drohender Überlast könnte ein Zusatzbit verwendet werden oder auch ein anderer Zeitschlitztyp, z.B. aus Fig. 2b, c oder d.

## Patentansprüche

1. Basisstation (2) für ein UMTS-Mobilfunksystem, das zur Übertragung von in Zeitschlitzen formatierten und CDMA kodierten Funksignalen dient, **dadurch gekennzeichnet, dass** die Basisstation (2) eine Einheit (7) zur Steuerung der Übertragungsleisfung und eine Verarbeitungseinheit (9) beinhaltet, dass die Einheit (7) zur Steuerung der Übertragungsleistung derart ausgestaltet ist, dass sie der Verarbeitungseinheit (9) mindestens eine Information über mindestens einen zu übertragenden Zeitschlitztyp übermittelt, wobei die Einheit (7) zur Steuerung der Übertragungsleistung die zu verwendenden Zeitschlitztypen aus empfangenen Feedback Indicatoren (FBI) bestimmt, wobei die Funksignale in Rahmen übertragen werden, jeder Rahmen mehrere Zeitschlitze beivhaltet, darunter Zeitschlitz Data 1, Zeitschlitz TPC (Transmit Power Control); Zeitschlitz TFCl (Transport Format Combination Indicator), Zeitschlitz Data2, Zeitschlitz PL (Pilot), wobei die Anordnung der Zeitschlitze im Rahmen vorgegeben ist, und wobei jede Information über einen zu übertragenden Zeitschlitztyp beinhaltet, welcher Zeitschlitz des Rahmens verwendet wird und welcher nicht.

2. Basisstation (2) nach Anspruch 1, **dadurch gekennzeichnet, dass** eine Information in Form mindestens einer vier Bit-Kombination übertragen wird, wobei jedes Bit einen Parameter eines Zeitschlitztyps repräsentiert, und wobei jeder Parameter angibt, ob ein Zeitschlitz verwendet wird oder nicht.

3. Basisstation (2) nach Anspruch 1, **dadurch gekennzeichnet, dass**:eine Information in Form mindestens einer zwei Bit-Kombination übertragen wird, wobei jede Bit-Kombination einen anderen Zeitschlitztyp repräsentiert.

4. Basisstation (2) nach Anspruch 1, **dadurch gekennzeichnet, dass** mindestens fünf verschiedene Zeitschlitztypen vorgesehen sind für compressed mode und SSDT.

5. Basisstation (2) nach Anspruch 1, **dadurch gekennzeichnet, dass** eine Information in Form mindestens einer zwei Bit-Kombination und zusammen mit power control Bits übertragen wird.

6. Basisstation (2) nach Anspruch 1, **dadurch gekennzeichnet, dass** die Übermittlung einer Information für jeden zu übertragenden Zeitschlitz erfolgt.

7. Downlink Steuereinheit (5) für eine Basisstation (2) für ein UMTS-Mobilfunksystem, das zur Übertragung von in Zeitschlitzen formattierten und CDMA kodierten Funksignalen dient, **dadurch gekennzeichnet, dass** die Basisstation (2) eine Einheit (7) zur Steuerung der Übertragungsleistung und eine Verarbeitungseinheit (9) beinhaltet, dass die Einheit (7) zur Steuerung der Übertragungsleistung derart ausgestaltet ist, dass sie der Verarbeitungseinheit (9) mindestens eine Information über mindestens einen zu übertragenden Zeitschlitztyp übermittelt, wobei die Einheit (7) zur Steuerung der Übertragungsleistung die zu verwendenden Zeitschlitztypen aus empfangenen Feedback Indicatoren (FBI) bestimmt, wobei die Funksignale in Rahmen übertragen werden, jeder Rahmen mehrere Zeitschlitze beinhaltet, darunter Zeitschlitz Data 1, Zeitschlitz TPC (Transmit Power Control), Zeitschlitz TFCI (Transport Format Combination Indicator), Zeitschlitz Data2, Zeitschlitz PL (Pilot), wobei die Anordnung der Zeitschlitze im Rahmen vorgegeben ist, und wobei jede Information über einen zu übertragenden Zeitschlitztyp beinhaltet, welcher Zeitschlitz des Rahmens verwendet wird und welcher nicht.

## Claims

1. A base station (2) for a UMTS mobile radio system which serves to transmit COMA-coded radio signals formatted in time slots, **characterized in that** the base station (2) comprises a transmit power control unit (7) and a processing unit (9), and that the transmit power control unit (7) is designed to transfer to the processing unit (9) at least one unit of information about at least one time-slot type to be transmitted, with the transmit power control unit (7) determining the time-slot type to be used from received Feedback Indicators (FBI), the radio signals being transmitted in frames which each contain several time slots, including time slot Data1, time slot TPC (Transmit Power Control), and time slot TFCI (Transport Format Combination Indicator), the arrangement of the time slots in the frame being predefined, and each unit of information about a time-slot type to be transmitted including information as to which time-slot type of the frame is to be used and which is not.

2. A base station (2) as set forth in claim 1, **characterized in that** a unit of information is transferred in the form of at least one four-bit combination, with each bit representing one parameter of a time-slot type, and each parameter indicating whether a time slot is to be used or not.

3. A base station (2) as set forth in claim 1, **characterized in that** a unit of information is transferred in the form of at least one two-bit combination, with each bit combination representing a different time-slot type.

4. A base station (2) as set forth in claim 1, **characterized in that** at least five different time-slot types are provided for compressed mode and SSDT.

5. A base station (2) as set forth in claim 1, **characterized in that** a unit of information is transferred in the form of at least one two-bit combination and together with power control bits.

6. A base station (2) as set forth in claim 1, **characterized in that** the transfer of a unit of information takes place for each time slot to be transmitted.

7. A downlink control unit (5) for a base station (2) for a UMTS mobile radio system, which serves to transmit COMA-coded radio signals formatted in time slots, **characterized in that** the base station (2) comprises a transmit power control unit (7) and a processing unit (9), and that the transmit power control unit (7) is designed to transfer to the processing unit (9) at least one unit of information about at least one time-slot type to be transmitted, with the transmit power control unit (7) determining the time-slot type to be used from received Feedback Indicators (FBI), the radio signal being transmitted in frames which each contain several time slots, including time slot Data1, time slot TPC (Transmit Power Control), and time slot TFCI (Transport Format Combination Indicator), the arrangement of the time slots in the frame being predefined, and each unit of information about a time-slot type to be transmitted including information as to which time slot of the frame is to be used and which is not.

## Revendications

1. Station de base (2) pour un système de téléphonie mobile UMTS, qui sert à la transmission de signaux radio formatés en intervalle de temps et codés en CDMA, **caractérisée en ce que** la station de base (2) contient une unité (7) pour le contrôle de la puissance de transmission et une unité de traitement (9), **en ce que** l'unité (7) pour le contrôle de la puissance de transmission est conçue de telle sorte qu'elle transmet à l'unité de traitement (9) au moins une information sur au moins un type d'intervalle de temps à transmettre, l'unité (7) pour le contrôle de la puissance de transmission déterminant les types d'intervalles de temps à utiliser à partir de Feedback Indicators (FBI) reçus, les signaux radio étant transmis dans le cadre, chaque cadre comprenant plusieurs intervalles de temps, dont l'intervalle de temps Data1, intervalle de temps TPC (Transmit power Control), l'intervalle de temps TFCI (Transport Format Combination Indicator), l'intervalle de temps Data2, l'intervalle de temps P1 (Pilot), la disposition des intervalles de temps dans le cadre étant prédéfinie, et chaque disposition contenant de l'information sur un type d'intervalle de temps à transmettre, pour savoir quel intervalle de temps du cadre est utilisé et quel intervalle de temps n'est pas utilisé.

2. Station de base (2) selon la revendication 1, **caractérisée en ce qu'**une information est transmise sous la forme d'au moins une combinaison de quatre bits, chaque bit représentant un paramètre d'un type d'intervalle de temps, et chaque paramètre indiquant si un intervalle de temps est utilisé ou non.

3. Station de base (2) selon la revendication 1, **caractérisée en ce qu'**une information est transmise sous la forme d'au moins une combinaison de deux bits, chaque combinaison de bits représentant un autre type d'intervalle de temps.

4. Station de base (2) selon la revendication 1, **caractérisée en ce qu'**au moins cinq types différents d'intervalles de temps sont prévus pour compressed mode et SSDT.

5. Station de base (2) selon la revendication 1, **caractérisée en ce qu'**une information est transmise sous la forme d'au moins une combinaison de deux bits et conjointement avec des power control bits.

6. Station de base (2) selon la revendication 1, **caractérisée en ce que** la transmission d'une information s'effectue pour chaque intervalle de temps à transmettre.

7. Unité de commande downlink (5) pour une station de base (2) pour un système de téléphonie mobile UMTS, qui sert à la transmission de signaux radio formatés en intervalles de temps et codés en CDMA, **caractérisée en ce que** la station de base (2) contient une unité (7) pour le contrôle de la puissance de transmission et une unité de traitement (9), **en ce que** l'unité (7) pour le contrôle de la puissance de transmission est conçue de telle sorte qu'elle transmet à l'unité de traitement (9) au moins une information sur au moins un type d'intervalle de temps à transmettre, l'unité (7) pour le contrôle de la puissance de transmission déterminant les types d'intervalles de temps à utiliser à partir de Feedback Indicators (FBI) reçus, les signaux radio étant transmis dans des cadres, chaque cadre contenant plusieurs intervalles de temps, dont l'intervalle de temps Data1, l'intervalle de temps TPC (Transmit Power Control), l'intervalle de temps TFCI (Transport Format Combination Indicator), l'intervalle de temps Data2, l'intervalle de temps PL (Pilot), la disposition des intervalles de temps étant prévue dans le cadre et chaque disposition contenant de l'information sur un type d'intervalle de temps à transmettre, pour savoir quel intervalle de temps du cadre est utilisé et quel intervalle de temps ne l'est pas.
